# EUROPÄISCHE PATENTSCHRIFT

(11) **EP 0 640 508 B1**
(45) Veröffentlichungstag und Bekanntmachung des Hinweises auf die Patenterteilung: **15.01.1997**
(21) Anmeldenummer: 94112433.1
(22) Anmeldetag: 09.08.1994
(51) Int. Cl.: B60N 2/28

(54) **Autokindersitz**
Children's seat for vehicles
Siège d'enfant pour véhicules

(30) Priorität: 26.08.1993 NO 933058
(43) Veröffentlichungstag der Anmeldung: 01.03.1995
(73) Patentinhaber: HTS AS, N-3535 Kroderen (NO)
(72) Erfinder: Thorup, Espen, N-1335 Snaroya (NO); Jacobsen, Halvard, N-0851 Oslo (NO); Lode, Svein E., c/o Designkontoret, N-0852 Oslo (NO)
(74) Vertreter: Gossel, Hans K., Dipl.-Ing.

(56) Entgegenhaltungen:
- DE-U- 8 504 975
- DE-U- 8 804 020
- FR-A- 2 185 188
- FR-A- 2 323 357
- GB-A- 2 159 401

## Beschreibung

Die vorliegende Erfindung betrifft einen Kindersitz, der auf einem der Sitze eines Fahrzeuges in Fahrtrichtung oder gegen die Fahrtrichtung angeordnet werden kann.

In der letzten Zeit haben mehrere Untersuchungen gezeigt, daß die heutigen Autokindersitze im Hinblick auf die Sicherheit bei Zusammenstößen nicht zufriedenstellend sind. Dies betrifft insbesondere Kindersitze, die im Vordersitz eines Autos in Fahrtrichtung plaziert sind. Solche Kindersitze sind normalerweise mit Hilfe der Sicherheitsgurte des Autos an den Autositzen befestigt. Da diese Sicherheitsgurte nicht stramm genug sind und aufgrund der Federung des Autositzes wird der Kindersitz bei einem eventuellen Frontalzusammenstoß weit nach vorne geworfen, bevor er von den Sicherheitsgurten gestoppt wird. Dies führt dazu, daß ein im Kindersitz angeschnalltes Kind bedeutenden Belastungen ausgesetzt ist, die teilweise zu erheblichen Verletzungen führen können.

Aus der gattungsbildenden FR-A-2 185 188 ist ein Autokindersitz zur Anordnung in Fahrtrichtung und gegen die Fahrtrichtung auf einem der Sitze eines Fahrzeuges bekannt, der eine Sitzschale, einen Sockel und eine Befestigungs- und Regulierungsvorrichtung aufweist, wobei die Sitzschale im Verhältnis zum Sockel in Fahrtrichtung verschiebbar angeordnet ist und im Verhältnis zum Sockel unabhängig von der Verschiebung in Fahrtrichtung schräggestellt werden kann.

Aufgabe der vorliegenden Erfindung ist daher, einen Autokindersitz zu schaffen, der die oben erwähnten Nachteile nicht mit sich bringt.

Um die Belastungen für das Kind bei einem eventuellen Zusammenstoß noch weiter zu verringern, wäre es von Vorteil, den Schwerpunkt des Kindes und des Kindersitzes dadurch zu senken, daß der Sitz des Autokindersitzes möglichst weit unten auf dem Autositz angebracht wird. Eine andere Aufgabe der vorliegenden Erfindung ist es daher, einen Autokindersitz zu erzeugen, bei dem die Sitzschale, die Befestigungs- und Regulierungsvorrichtung und der Sockel in zusammengesetztem Zustand eine integrierte Einheit bilden.

Eine weitere Aufgabe der vorliegenden Erfindung ist, einen Autokindersitz mit einer Regulierungsvorrichtung zu erzeugen, die eine Neigung der Sitzschale gegenüber dem Sockel und dessen Verschiebung in Fahrtrichtung ermöglicht. Bei den bekannten Autokindersitzen kann die Neigung der Sitzschale nur im Verhältnis zum Sockel verstellt werden.

Diese und andere Aufgaben werden mit einem Autokindersitz erzielt, der auf einem der Sitze des Fahrzeuges in Fahrtrichtung und gegen die Fahrtrichtung plaziert werden kann, und der eine Sitzschale, einen Sockel und eine Befestigungs- und Regulierungsvorrichtung umfaßt, wobei der Autokindersitz dadurch gekennzeichnet ist, daß die Sitzschale gegenüber dem Sockel in Fahrtrichtung verschiebbar angeordnet ist, und daß die Sitzschale im Verhältnis zum Sockel, unabhängig von der Verschiebung in Fahrtrichtung, schräggestellt werden kann. Die Befestigungs- und Regulierungsvorrichtung enthält Schienen mit Regulierlöchern und Befestigungsorganen zum Befestigen an den Sicherheitsgurten des Fahrzeuges, eine erste Achse, an deren beiden Enden zum Eingriff mit den komplementär gestalteten Regulierlöchern federbelastete Zapfen angebracht sind, die in belastetem Zustand über die Enden der ersten Achse hinausragen, gezähnte Platten mit Zähnen, die an der ersten Achse befestigt sind, eine zweite Achse mit einem Bügelhandgriff, an den die Enden der zweiten Achse mit lösbarem Eingriff an die Zähne der gezähnten Platten angepaßt sind, und die zweite Achse mit den federbelasteten Zapfen mit Hilfe eines Schnurzuges verbunden ist.

Die Zapfen sind mit Federn versehen, die über den Schnurzug die Enden der zweiten Achse mit den Zähnen der gezähnten Platten lösbar in Eingriff halten.

Der Sockel ist mit Aussparungen zum Befestigen der Schienen versehen.

Der Sockel ist mit einer Aussparung versehen, die den hinteren Teil der Sitzschale aufnehmen kann, wenn diese schräggestellt ist.

Die Befestigungs- und Regulierungsvorrichtung ist unten im Sockel und oben in den Seitenwänden angeordnet außerdem ragen Teile des Sockels in die Seitenwände des Kindersitzes hinauf.

Es folgt die Beschreibung einer Ausführungsform der Erfindung mit Hinweis auf die beigefügten Zeichnungen.

Fig. 1 zeigt eine erfindungsgemäße Ausführungsform des Autokindersitzes in nicht zusammengesetztem Zustand.

Fig. 2 ist eine Detailzeichnung, die einen erfindungsgemäßen Teil der Befestigungs- und Regulierungsvorrichtung zeigt.

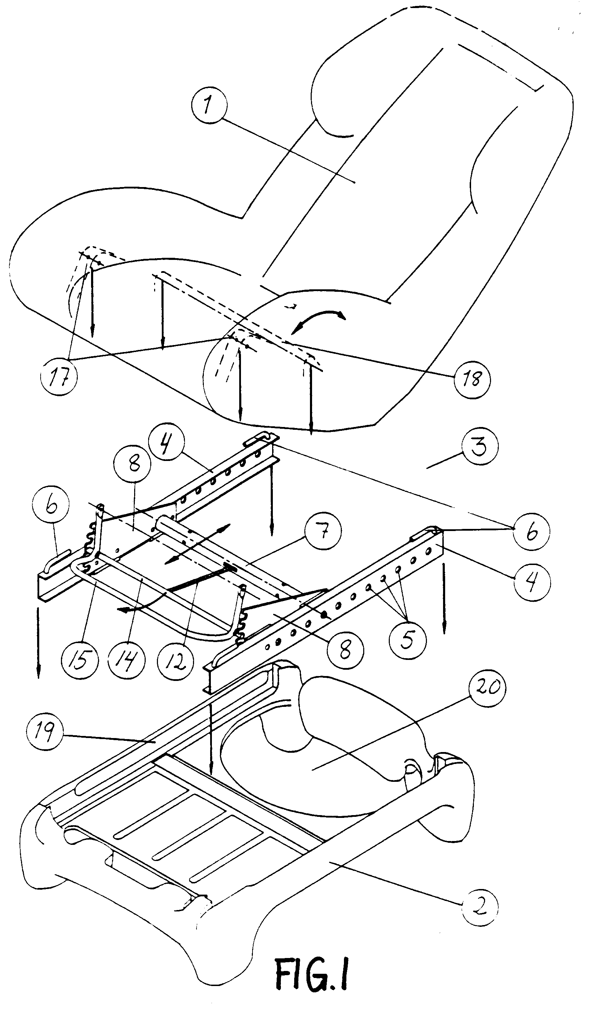

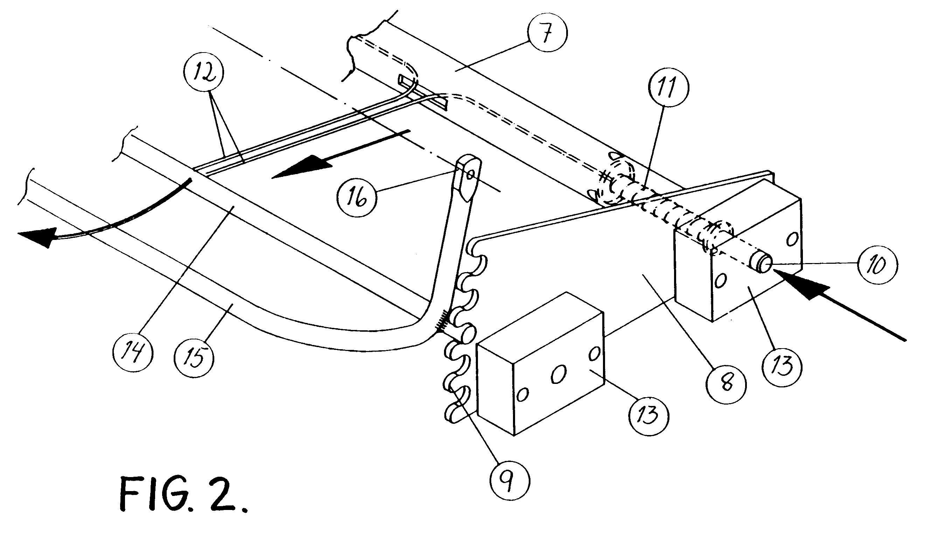

Der in den Figuren 1 und 2 gezeigte Autokindersitz besteht aus einer Sitzschale 1, einem Sockel 2 und einer Befestigungs- und Regulierungsvorrichtung 3. Die Befestigungs-Regulierungsvorrichtung hat zwei Regulierungsfunktionen, nämlich die horizontale Regulierung (mit der und gegen die Fahrtrichtung) sowie die Regulierung der Neigung der Sitzschale. Die Befestigungs- und Regulierungsvorrichtung 3 besteht aus zwei Schienen 4 mit Regulierlöchern 5. Die Schienen 4 sind auch mit Haken 6 versehen zum Befestigen des Autokindersitzes mit Hilfe der Sicherheitsgurten des Fahrzeuges. Eine stangenförmige Achse 7 ist an beiden Enden mit Zapfen 10 versehen, die aus der Achse 7 herausragen. Diese Zapfen 10 sind durch eine Feder 11 belastet, so daß die Zapfen 10 zum Eingriff mit Regulierlöchern 5 in der Schiene aus dem Ende der Achse 7 gedrückt werden. Die durch federbelasteten Zapfen 10 sind mit Hilfe eines Schnurzuges 12 an einer zweiten Achse 14 befestigt. An beiden Seiten der ersten Achse 7 sind gezähnte Platten 8 mit Zähnen 9 und Gleitklötzen 13 befestigt. Die Gleitklötze 13 sind so gestaltet, daß sie in die Nut der Schienen 4 passen. Die hinteren Gleitklötze 13 sind mit einem durchgehenden Loch gestaltet, so daß die durch federbelasteten Zapfen 10 in federbelastetem Zustand über die Gleitklötze 13 hinausragen. Die Zähne 9 der gezähnten Platten 8 sind zu den Enden der zweiten Achse 14 komplemantär ausgebildet, so daß diese mit den Zähnen 9 der gezähnten Platten in Eingriff gehen können.

An der zweiten Achse 14 ist ein bügelförmiger Handgriff 15 befestigt, dessen Enden 16 an komplementär gestalteten Organen 17 an der Unterseite der Sitzschale befestigt sind. An der Unterseite der Sitzschale 1 befindet sich auch ein Kanal oder eine Aussparung 18, die zur ersten Achse 7 komplementär ausgebildet ist.

Bei Einstellung der Position der Sitzschale zum Sockel 2 wird der Bügelhandgriff 15 nach außen und oben gezogen. Die Enden der zweiten Achse 14 gehen dann aus dem Eingriff mit den Zähnen 9 der gezähnten Platte 8 heraus, so daß die Sitzschale 1 nach oben oder unten geschwenkt und die Neigung der Sitzschale reguliert werden kann. Bei Zug am Bügelhandgriff 15 und damit am Schnurzug 12 gehen die Zapfen 10 aus dem Eingriff mit den Regulierlöchern 5 in den Schienen 4, so daß die Sitzschale 1 nach vorn/rückwärts reguliert wird. Wenn die Sitzschale 1 in der gewünschten Stellung angebracht ist, wird der Bügelhandgriff 15 losgelassen, so daß die Enden der zweiten Achse 14 mit den Zähnen der gezähnten Platten 8 und die Zapfen 10 mit den Regulierlöchern 5 in der Schiene 4 in Eingriff gehen.

In zusammengesetztem Zustand ist der Autokindersitz sehr kompakt, da die Unterseite der Sitzschale 1 so gestaltet ist, daß ein Teil der Befestigungs- und Regulierungsvorrichtung in der Sitzschale angeordnet ist, während der restliche Teil der Befestigungs- und Regulierungsvorrichtung 3 im Sockel 2 untergebracht ist. Teile des Sockels 2 ragen auch in die Seitenwände der Sitzschale hinauf, so daß eine sehr kompakte Gestaltung erzielt wird. Der Sockel 2 ist mit Aussparungen 19 für die Schienen 4 sowie mit einer angepaßten Öffnung oder Aussparung 20 für den hinteren Teil der Sitzschale 1 ausgebildet, wenn diese in nach rückwärts gewandte Stellung eingestellt ist.

Sowohl die Sitzschale 1 als auch der Sockel 2 sind vorzugsweise aus formgeblasenem Kunststoff hergestellt.

Der erfindungsgemäße Autokindersitz kann im Vordersitz des Fahrzeuges sowohl in Fahrtrichtung oder gegen die Fahrtrichtung gerichtet oder im Rücksitz des Fahrzeuges in Fahrtrichtung gerichtet angebracht werden. Bei Plazierung in Fahrtrichtung im Vordersitz wird der Kindersitz im Dreipunktgurt des Fahrzeuges befestigt. Der eine Teil des Fahrzeugsicherheitsgurtes (der normalerweise von einer Bodenbefestigung zu einem Gurtenschloß geht) wird nach oben in die Öffnung oder Aussparung 20 des Sockels geführt, um zwei Befestigungsorgane 6 am Sockel herum, wieder zurück in die Öffnung 20 und im Gurtenschloß des Fahrzeuges befestigt. Der obere Teil des Sicherheitsgurtes (der normalerweise vom Gurtenschloß zu einem Befestigungspunkt oben am Türrahmen geht) wird durch ein Reibungsschloß (nicht gezeigt) am rückwärtigen Rand der Sitzschale geführt. Dieses Reibungsschloß kann mit einem Durchgang für den Sicherheitsgurt konstruiert sein und weist einen Schlitz/eine Öffnung auf, in die der Gurt hineingeführt wird. Die Innenseite des Schlitzes kann rauh oder gerillt sein, um Reibung gegen den Gurt zu erzeugen. Gegen diese rauhe Fläche ist ein Griff mit einer konischen Fläche angebracht, die auch rauh oder gerillt ist, und dieser Griff weist dieselbe Breite wie der Sicherheitsgurt auf. Der Griff ist federbelastet und wirkt so, daß beim Strammen des Gurtes die konische Fläche gegen den Gurt gedrückt wird und den Gurt mehr und mehr sperrt, je mehr der Gurt sich strammt. Durch Druck auf den Griff wird der Gurt so gelockert, daß die Stellung des Kindersitzes mit Hilfe des Befestigungs- und Regulierungsmechanismus 3 eingestellt werden kann. Zweck des Gurtenschlosses ist, den Kindersitz mit Hilfe von Zweipunkts- oder Dreipunktsgurten, die bereits im Fahrzeug sind, am Platze zu halten, so daß ein eventuelles Sichlockern der Sicherheitsgurten in wesentlichem Grade reduziert wird. Außer daß der Autokindersitz erfindungsgemäß mit Hilfe der Sicherheitsgruten des Fahrzeuges befestigt werden kann, kann er zusätzlich mit extra Gurten, die auf dieselbe Weise in den vorderen Befestigungsorganen 6 am Sockel 2 angebracht werden, befestigt werden. Dieser Gurt wird in einen eigenen Beschlag hinuntergeführt, der in den vorderen Schraubenbefestigungen des Fahrzeugsitzes befestigt sein kann.

Bei einer Plazierung gegen die Fahrtrichtung auf dem Vordersitz des Fahrzeuges wird der Autokindersitz wie oben beschrieben befestigt, außer daß der Dreipunktgurt des Fahrzeuges um den Rücken anstatt hinter dem Rücken läuft.

Bei Montage des Autokindersitzes auf dem Rücksitz des Fahrzeuges wird die Befestigung auf dieselbe Weise wie oben beschrieben vorgenommen, außer daß der extra Gurt in den hinteren Befestigungsbolzen des Fahrzeugvordersitzes montiert werden kann.

Beim erfindungsgemäßen Autokindersitz werden Kopf und Nacken des Kindes bei Seiten- und Schrägkollisionen dadurch geschützt, daß die Sitzschale 1 die Schleuderbewegungen (Whiplash-Bewegungen) des Kopfes aufnimmt. Die Sitzschale 1 ist mit einem Kopfschutz versehen, der außen aus einem Kunststoffkonstruktionsmaterial besteht und innen aus einem energieabsorbierenden Material, das außerdem mit Stoff bezogen ist. Der Kopfschutz ist mit Hilfe von Reibung befestigt und weist am oberen, rückwärtigen Rand dieselbe Kontur wie die Sitzschale 1 auf und folgt der vorderen Seitenpolsterung bis zur Spannbefestigung hinunter, die im Boden liegt und die Konstruktionen festhält. Der Kopfschutz ist eine innere Verlängerung der Seitenstützen des Sitzes für den Kopf und hält den Kopf des Kindes nach oben und seitlich fest. Er wirkt daher als Kopfschutz. In die Sitzschale 1 ist dort, wo Rücken, Nacken und Kopf des Kindes in den Rücken des Sitzes gedrückt werden, energieabsorbierendes Material eingearbeitet. Die Sitzschale ist auch in der Kreuzpartie mit einem weicheren Teil ausgerüstet, um bei großer Belastung des inneren Teils der Sitzschale einen Milzriß des Kindes zu verhindern. Dies gilt auch für Teile der Seitenwände oben, wo der Kopf des Kindes bei einer eventuellen Kollision treffen würde.

Die beschriebene Ausführungsform des erfindungsgemäßen Autokindersitzes ist besonders für die Verwendung in Personenkraftwagen geeignet. Selbstverständlich kann der Autokindersitz auch in anderen Verkehrsmitteln, wie z.B. im Zug, Flugzeug, Bus, Boot usw. verwendet werden.

## Patentansprüche

1. Autokindersitz zur Anordnung in Fahrtrichtung und gegen die Fahrtrichtung auf einem der Sitze eines Fahrzeuges, umfassend eine Sitzschale (1), einen Sockel (2) und eine Befestigungs- und Regulierungsvorrichtung (3), wobei die Sitzschale (1) im Verhältnis zum Sockel (2) in Fahrtrichtung verschiebbar angeordnet ist und die Sitzschale (1) im Verhältnis zum Sockel (2), unabhängig von der Verschiebung in Fahrtrichtung, schräggestellt werden kann,
**dadurch gekennzeichnet,**
daß die Befestigungs- und Regulierungsvorrichtung (3) Schienen (4) mit Regulierlöchern (5) und Befestigungsorganen (6) zum Befestigen der Sicherheitsgurte des Fahrzeugs enthält, eine erste Achse (7), an deren beiden Enden federbelastete Zapfen (10) angebracht sind, die in federbelastetem Zustand über die Enden der ersten Achse (7) hinausragen zum Eingriff mit den komplementär ausgebildeten Regulierlöchern (4), gezähnten Platten (8) mit Zähnen (9), die an der ersten Achse (7) befestigt sind, eine zweite Achse (14) mit einem Bügelhandgriff (15), an den die Enden der zweiten Achse (14) in lösbarem Eingriff mit den Zähnen (9) der gezähnten Platten (8) angepaßt sind, wobei die zweite Achse (14) mit den federbelasteten Zapfen (10) mit Hilfe eines Schnurzuges (12) verbunden ist.

2. Autokindersitz nach Anspruch 1, dadurch gekennzeichnet, daß die Zapfen (10) mit Federn (11) versehen sind, die über den Schnurzug (12) die Enden der zweiten Achse (14) mit den Zähnen (9) der gezähnten Platten (8) lösbar in Eingriff halten.

3. Autokindersitz nach einem der vorstehenden Ansprüche, dadurch gekennzeichnet, daß der Sockel (2) mit Aussparungen (19) zum Befestigen der Schienen (4) versehen ist.

4. Autokindersitz nach einem der vorstehenden Ansprüche, dadurch gekennzeichnet, daß der Sockel (2) mit einer Öffnung oder Aussparung (20) ausgebildet ist, die den hinteren Teil der Sitzschale (1) aufnehmen kann, wenn diese schräggestellt ist.

5. Autokindersitz nach einem der vorstehenden Ansprüche, dadurch gekennzeichnet, daß die Befestigungs- und Regulierungsvorrichtung (3)) unten im Sockel (2) und nach oben in den Seitenwänden der Sitzschale (1) angeordnet ist, sowie daß Teile des Sockels (2) in die Seitenwände des Kindersitzes hinaufreichen.

## Claims

1. Child car seat for arrangement in the direction of travel and opposite to the direction of travel on one of the vehicle seats, comprising a seat shell (1), a base (2) and a fastening and adjustment device (3), the seat shell (1) being adjustable in the direction of travel relative to the base, and the seat shell (1) being tiltable relative to the base (2) irrespective of its adjustment in the direction of travel,
**characterised in that**
the fastening and adjustment device (3) contains rails (4) with adjusting holes (5) and fasteners (6) to attach the vehicle's safety belts, and further characterised by a first spindle (7), on both ends of which are mounted spring-loaded pins (10) which project beyond the ends of said first spindle (7) in a spring-loaded state in order to engage in the correspondingly designed adjusting holes (5), by toothed plates (8) with teeth (9), which plates (8) being attached to the first spindle (7), by a second spindle (14) with a curved bar handle (15) to which the ends of the second spindle (14) are engaged with the teeth (9) of the toothed plates (8) by means of a releasable engagement mechanism, the second spindle (14) being attached to the spring-loaded pins (10) with the aid of a cord pull (12).

2. Child car seat according to Claim 1, characterised in that the pins (10) are provided with springs (11) which retain via the cord pull (12) the ends of the second spindle (14) while these are engaged with the teeth (9) of the toothed plates (8) by means of a releasable engagement mechanism.

3. Child car seat according to one of the preceding Claims, characterised in that the base (2) is provided with recesses (19) for fixing the rails (4).

4. Child car seat according to one of the preceding Claims, characterised in that the base (2) is designed with an opening or recess (20) which can receive the rear section of the seat shell (1) when it is tilted.

5. Child car seat according to one of the preceding Claims, characterised in that the fastening and adjustment device (3) is mounted at the bottom in the base (2) and at the top in the side walls of the seat shell (1), and that sections of the base (2) extend up into the side walls of the child seat.

## Revendications

1. Siège d'enfant pour véhicules pour disposition en direction de la marche et an la direction contre la marche sur un des sièges d'un véhicule, présentant une coque de siège (1), un socle (2) et un dispositif de fixation et de régulation (3), la coque de siège (1) étant disposée par rapport au socle (2) de manière à pouvoir être déplacée en direction de la marche et la coque de siège (1) pouvant être placée obliquement par rapport au socle (2) indépendamment du déplacement en direction de la marche,
caractérisé en ce que le dispositif de fixation et de régulation (3) comporte des rails (4) avec des trous de régulation (5) et des organes de fixation (6) pour fixer les ceintures de sécurité du véhicule, un premier axe (7) aux deux extrémités duquel sont prévus des pivots (10) pressés par des ressorts qui dans l'état pressé par les ressorts dépassent les extrémités du premier axe (7) pour entrer en prise avec les trous de régulation (4) de forme complémentaire, des plaques dentelées (8) avec des dents (9) qui sont fixées au premier axe (7), un second axe (15) avec une poignée en étrier (15), à laquelle les extrémités du second axe (14) sont adaptées pour une mise en prise pouvant être détachée avec les dents (9) des plaques dentelées (8), le seconde axe (14) étant relié avec les pivots pressés par un ressort (10) à l'aide d'un dispositif de tirage (12).

2. Siège d'enfant pour véhicules selon la revendication 1, caractérisé en ce que les pivots (10) sont pourvus de ressorts (11) qui tiennent moyennant le dispositif de tirage (12) les extrémités du second axe (14) avec les dents (9) des plaques dentelés (8) en prise détachable.

3. Siège d'enfant pour véhicules selon l'une ou l'autre des revendications précédentes, caractérisé en ce que le socle (2) est pourvu d'échancrures (19) pour fixer les rails (4).

4. Siège d'enfant pour véhicules selon l'une quelconque des revendications précédentes, caractérisé en ce que le socle (2) est formé avec une ouverture ou une échancrure (20) qui peut recevoir la partie arrière de la coque du siège (1) lorsque celle-ci est en position oblique.

5. Siège d'enfant pour véhicule selon l'une quelconque des revendications précédentes, caractérisé en ce que le dispositif de fixation et de régulation (3) est disposé en bas dans le socle (2) et vers le haut dans les parois latérales de la coque du siège (1) et que des parties du socle (2) se prolongent dans les parois latérales du siège d'enfant.
